# EUROPÄISCHE PATENTSCHRIFT

(11) **EP 0 738 816 B1**
(45) Veröffentlichungstag und Bekanntmachung des Hinweises auf die Patenterteilung: **10.06.1998**
(21) Anmeldenummer: 96104904.6
(22) Anmeldetag: 27.03.1996
(51) Int. Cl.: E05D 5/08, F16B 12/20

(54) **Befestigungselement**
Fastening element
Elément de fixation

(30) Priorität: 19.04.1995 DE 29506600 U; 11.07.1995 DE 29511216 U
(43) Veröffentlichungstag der Anmeldung: 23.10.1996
(73) Patentinhaber: Arturo Salice S.p.A., I-22060 Novedrate (Como) (IT)
(72) Erfinder:
(74) Vertreter: Gossel, Hans K., Dipl.-Ing.

(56) Entgegenhaltungen:
- DE-A- 2 905 378

## Beschreibung

Die Erfindung betrifft ein Befestigungselement für Beschlagteile nach dem Oberbegriff des Patentanspruchs 1.

Möbel werden üblicherweise in Einzelteilen geliefert oder von Benutzern in vorgefertigen Einzelteilen gekauft, so daß sie erst an ihrem endgültigen Standort montiert und in ihren gebrauchsfähigen Zustand gebracht werden. Dabei ist es für die Monteure und insbesondere für die Benutzer, bei denen es sich üblicherweise um in der Montage von Möbeln unerfahrene Personen handelt, wünschenswert, daß sich die vorgefertigten Möbelteile einfach und schnell zu den gebrauchsfähigen Möbeln zusammensetzen und montieren lassen. Eine besondere Montagefreundlichkeit ist gegeben, wenn sich die Möbel einfach zusammenfügen und sogar ohne Werkzeuge montieren lassen. Es ist daher ein Bestreben der Beschlaghersteller, der Möbelindustrie Befestigungselemente zu liefern, die die Montage vorgefertigter Möbelteile ohne besondere Werkzeuge ermöglichen. So sind beispielsweise aus DE-C-28 37 327 und EP-A-O 610 765 Möbelbeschlagteile bekannt, deren Befestigungselemente sich in passend vorgebohrte Bohrungen einsetzen und in diesen durch Umlegen eines Hebels, also ohne Betätigung eines Werkzeugs, verriegeln lassen. Ein Befestigungselement der Eingangs angegebenen Art ist aus DE-A-29 05 378 bekannt.

Aufgabe der vorliegenden Erfindung ist es, ein Befestigungselement der eingangs angegebenen Art zu schaffen, das sich nur durch Umlegen oder Niederdrücken eines Hebels einfach und mit sicherem Sitz in einer vorgebohrten Bohrung verriegeln läßt.

Erfindungsgemäß wird diese Aufgabe durch ein Befestigungselement mit den Merkmalen des Patentanspruchs 1 gelöst.

Der zapfenförmige zylindrische Abschnitt des erfindungsgemäßen Befestigungselements wird wie ein Dübel in ein passendes vorgebohrtes Loch eingesetzt, wobei dieser sodann durch Umlegen des Hebels dadurch in der Bohrung verankert wird, daß die Spreizkörper ausgefahren werden und verriegelnd an den Wänden der Bohrung angreifen.

Der erfindungsgemäße zapfenförmige zylindrische Abschnitt kann mit Beschlagteilen aller Art verbunden sein, die in einem vorgebohrten Loch eines Bauteils zu befestigen sind.

Nach einer bevorzugten Ausführungsform dient das erfindungsgemäße Befestigungselement der Befestigung eines plattenförmigen Teils, vorzugsweise eines Möbelbeschlagteils, wobei mit dem plattenförmigen Teil der im wesentlichen zylindrische Abschnitt verbunden ist, wobei an dem plattenförmigen Teil ein Hebel angelenkt ist und mit einem Ende des Hebels im Abstand von seinem Schwenklager ein Lenker gelenkig verbunden ist, dessen anderes Ende an dem in den axialen Schlitzen des zylindrischen Abschnitts geführten Bolzen befestigt ist.

Die Spreizkörper können aus etwa rechteckigen Führungsstücken bestehen, die an ihren aus- und einfahrbaren Seiten bogenförmig gekrümmte, verzahnte Segmente tragen. Zweckmäßigerweise sind Segmente mit sägezahnartigen Rippen versehen, die sich in die Seitenwandung der Bohrung einschneiden. Die dem plattenförmigen Teil zugewandten Flanken der Rippen können stärker abgeschrägt sein als die Gegenflanken, so daß der dübelartige zylindrische Abschnitt beim Eindrücken der Rippen in die Wandung der Bohrung in diese hineingezogen wird.

Die Führungsstücke können mit ihren inneren Flächen an dem zwischen diesen eingeschlossenen Lenker und mit ihren äußeren Flächen an den Seitenwänden des Durchbruchs geführt sein.

Nach einer bevorzugten Ausführungsform ist vorgesehen, daß die Führungsstücke mit stirnseitigen Flächen versehen sind, die zwischen den den Durchbruch begrenzenden, boden- und deckseitigen Führungsflächen des zylindrischen Abschnitts geführt sind, die für jeden Spreizkörper in Ausfahrrichtung ansteigend geneigt, also in Richtung auf das plattenförmige Teil ansteigen. Durch diese Ausführungsform wird erreicht, daß durch das gegensinnige Ausfahren der Spreizkörper der zylindrische Abschnitt in das vorgebohrte Loch hineingezogen wird. Zweckmäßigerweise sind in Anpassung an die Führungsflächen des Durchbruchs auch die stirnseitigen Flächen der Führungsstücke entsprechend den Führungsflächen abgeschrägt. Nach dieser Ausführungsform besitzen die Führungsstücke die Umfangsform von Parallelogrammen.

Zum gegensinnigen Aus- und Einfahren besitzen die Führungsstücke sich kreuzende Abschnitte der Langlöcher. Nach einer bevorzugten Ausführungsform ist vorgesehen, daß die Langlöcher der Führungsstücke winkelig ausgebildet sind und einen oberen längeren und stärker von der Mittelebene abgewinkelten und einen unteren schwächer und gegensinnig von der Mittelebene abgewinkelten kürzeren Ast aufweisen. Bei dieser Ausführungsform werden die Spreizkörper durch Herabdrücken des Verriegelungshebels dadurch ausgefahren, daß der Bolzen über die längeren Abschnitte der Langlöcher gleitet, bevor er in deren kürzeren Äste eintritt, in denen er in der verriegelten Stellung aufgrund der gegensinnigen Abwinkelung arretiert ist. Auf diese Weise ist das erfindungsgemäße Befestigungselement gegen ein unbeabsichtigtes Lösen gesichert.

Nach einer anderen Ausführungsform des erfindungsgemäßen Befestigungselements ist vorgesehen, daß die Führungsstücke an ihren oberen Seiten mit Anschlägen versehen sind, die mit Gegenanschlägen der Deckwände der Durchbrüche zusammenwirken, so daß die Spreizkörper durch ein Verfahren des Bolzens in den Langlöchern über die Hüllkontur des zylindrischen Abschnitts ausgeschwenkt in diese eingezogen werden.

Das erfindungsgemäße Befestigungselement kann zur Montage aller in vorgebohrten Löchern zu befestigenden Teilen verwendet werden. Mit besonderem Vorteil lassen sich jedoch mit dem erfindungsgemäßen Befestigungselement Möbelbeschlagteile montieren. Zur Befestigung eines Scharniers an einer Möbeltür oder -klappe können zwei Befestigungselemente an dem flanschartig erweiterten Rand eines Scharniertopfes oder der Befestigungsplatte eines Scharnierarms befestigt sein. Dabei besteht der Hebel zweckmäßigerweise aus einer Platte, die in ihrer eingeschwenkten Verriegelungsstellung den flanschartig erweiterten Rand des Scharniertopfes oder den der Befestigung dienenden Flügel der Befestigungsplatte überdeckt. Bei dieser Ausgestaltung tritt im montierten Zustand der Verriegelungshebel sichtbar nicht in Erscheinung, da dieser den Befestigungsflansch oder einen der Befestigung dienenden Flügel überdeckt und somit dem montierten Beschlagteil ein ansprechendes Aussehen verleiht.

Nach einer weiteren bevorzugten Ausführungsform ist vorgesehen, daß der zapfenförmige zylindrische Abschnitt mit einem an einem Möbelteil zu befestigenden Beschlagteil verbunden und in eine an seinen Durchmesser angepaßte Bohrung eines Möbelteils einsetzbar ist. Zweckmäßigerweise bildet der zylindrische Abschnitt einen radialen Fortsatz eines topfförmigen Gehäuses. Dabei kann der Schieber, der den die Spreizkörper spreizenden Bolzen trägt, einstückig mit einem Betätigungsteil versehen sein, an dem der Betätigungshebel angreift. Zweckmäßigerweise ist das Betätigungsteil des Schiebers in seitlichen Nuten der Seitenwandungen der Aussparung des Gehäuses radial verschieblich geführt, wobei der mit diesem verbundene Schieber durch einen Durchbruch der Umfangswandung des Gehäuses in den zapfenartigen zylindrischen Fortsatz greift.

In weiterer Ausgestaltung der Erfindung ist vorgesehen, daß der Betätigungshebel als zweiarmiger Hebel ausgebildet und mit seiner Schwenkachse in Bohrungen der Seitenwände der Ausnehmung gelagert ist, wobei der kürzere Arm des Hebels in einen Durchbruch des Betätigungsteils greift und der längere Arm auf der Oberseite des Gehäuses liegt. Dabei ist der längere Arm des Hebels aus seiner aufragenden gelösten Stellung des Befestigungselements in seine Verriegelungsstellung schwenkbar, in der er etwa in der Ebene der Deckplatte des Gehäuses liegt. Auf diese Weise ist sichergestellt, daß in der verriegelten Stellung der längere der Betätigung dienende Hebelarm nicht unabsichtlich dadurch entriegelt werden kann, daß Gegenstände gegen diesen stoßen und diesen aufrichten.

Das Betätigungsteil kann mit einem rechteckigen Durchbruch versehen sein, wobei der in diesen greifende kurze Hebelarm etwa die Form eines gleichschenkeligen Dreiecks in abgerundeten Ecken besitzt, dessen Spitze im Bereich der Schwenkachse liegt. Dabei sind die Winkel und die Krümmungsradien der Ecken derart aufeinander abgestimmt, daß bei einem Verschwenken des Hebels die Vorder- und Hinterseite des etwa dreieckigen kürzeren Hebels im wesentlichen an den Vorder- und Hinterkanten des rechteckigen Durchbruchs des Betätigungsteils anliegen.

In weiterer Ausgestaltung der Erfindung ist vorgesehen, daß das Gehäuse in seiner durch den zylindrischen Abschnitt verlaufenden axialen Mittelebene geteilt ist und aus zwei spiegelbildlich zueinander verlaufenden Teilen besteht. Die beiden Gehäuseteile können in ihrer Trennebene mit Zapfen und komplementären Ausnehmungen versehen sein, so daß sie sich in einfacher Weise nach dem Einsetzen des Schiebers und des Hebels zu dem geschlossenen Gehäuse zusammenfügen lassen. Zweckmäßigerweise bestehen die Gehäuseteile aus Kunststoffspritzgußteilen.

Nach einer erfinderischen Weiterbildung ist vorgesehen, daß der zapfenförmige zylindrische Abschnitt die Verlängerung eines Einsatzgehäuses, in dem der Schieber und der Betätigungshebel gelagert sind, bildet, daß das Einsatzgehäuse längsverschieblich in dem topfförmigen Gehäuse gelagert ist und daß die Lagerzapfen des Betätigungshebels in Bohrung der Seitenwände des Einsatzgehäuses gelagert und mit exzentrischen Verlängerungszapfen versehen sind, die in Bohrungen der Wandungen der Aussparung des Gehäuses gelagert sind. Bei dieser Ausgestaltung werden bei einem Verschwenken des Betätigungshebels aus seiner aufrechten entriegelten Stellung in die verriegelte Stellung nicht nur die Spreizkörper durch den Bolzen gespreizt, sondern das Einsatzgehäuse führt zusätzlich in dem Gehäuse eine radiale Einzugsbewegung aus, so daß dadurch ein etwa vorhandenes Spiel miteinander zu verbindenden Teile ausgeglichen werden kann.

Auch das Einsatzgehäuse kann in seiner axialen Mittelebene geteilt sein und aus Kunststoffspritzgußteilen bestehen.

Ausführungsbeispiele der Erfindung werden nachstehend anhand der Zeichnung näher erläutert. In dieser zeigt
- Fig. 1: ein mit den erfindungsgemäßen Befestigungselementen versehenes Scharnier in der Montagestellung,
- Fig. 2: den von dem Scharnier nach Fig. 1 gelösten Scharniertopf in der Montagestellung,
- Fig. 3: eine der Fig. 2 entsprechende Darstellung des Scharniertopfes in seiner verriegelten montierten Stellung,
- Fig. 4: einen Schnitt durch den dübelartigen zylindrischen Abschnitt längs der Linie IV-IV in Fig. 2,
- Fig. 5: einen Schnitt durch den dübelartigen zylindrischen Abschnitt längs der Linie V-V in Fig. 3,
- Fig. 6: eine Seitenansicht eines Spreizkörpers,
- Fig. 7: eine Seitenansicht des dübelförmigen zylindrischen Abschnitts,
- Fig. 8: einen Schnitt durch den zylindrischen Abschnitt längs der Linie VIII-VIII in Fig. 7,
- Fig. 9: eine perspektivische Ansicht einer Ausführungsform des Scharniertopfes ohne Betätigungshebel und zylindrische, dübelartige Abschnitte,
- Fig. 10: den Scharniertopf mit den erfindungsgemäßen Befestigungselementen nach den Fig. 1 bis 8 im auseinandergezogenen Zustand seiner Einzelteile,
- Fig. 11: eine Seitenansicht eines Scharniertopfes mit einer anderen Ausführungsform des erfindungsgemäßen Befestigungselements im entriegelten Zustand, teilweise im Schnitt,
- Fig. 12: den Scharniertopf nach Fig. 11 im verriegelten Zustand seiner Befestigungselemente,
- Fig. 13: einen Schnitt durch das Befestigungselement längs der Linie XIII-XIII in Fig. 11,
- Fig. 14: einen Schnitt durch das Befestigungselement längs der Linie XIV-XIV in Fig. 12,
- Fig. 15: eine Seitenansicht des dübelförmigen zylindrischen Abschnitts des Befestigungselements nach den Fig. 11 und 12,
- Fig. 16: einen Schnitt durch den zylindrischen Abschnitt längs der Linie XVI-XVI in Fig. 15,
- Fig. 17: eine Seitenansicht eines Spreizkörpers des Befestigungselements nach den Fig. 11 und 12,
- Fig. 18: eine Ansicht auf den Spreizkörper in Richtung des Pfeils B in Fig. 17,
- Fig. 19: einen Axialschnitt durch eine topfförmiges Möbelbeschlagteil zum Verbinden zweier stumpf und/oder winkelig aufeinanderstoßender Möbelteile,
- Fig. 20: eine Draufsicht auf das Beschlagteil nach Fig. 19, teilweise im Schnitt,
- Fig. 21: einen Schnitt durch den zapfenförmigen zylindrischen Fortsatz des Beschlagteils längs der Linie XXI-XXI in Fig. 20,
- Fig. 22: einen der Fig. 19 entsprechenden Schnitt im verriegelten Zustand des Beschlagteils,
- Fig. 23: eine Draufsicht auf das Beschlagteil nach Fig. 22,
- Fig. 24: einen der Fig. 21 entsprechenden Schnitt durch den zylindrischen Fortsatz längs der Linie XXIV-XXIV in Fig. 23,
- Fig. 25: eine Seitenansicht der Trennebenen der Gehäusehälften des topfförmigen Gehäuses,
- Fig. 26: eine Draufsicht auf die Gehäusehälften nach Fig. 25 unmittelbar vor ihrem Zusammenfügen,
- Fig. 27: die Seitenansicht des Spreizkörpers nach Fig. 6,
- Fig. 28: eine der Fig. 10 entsprechende Darstellung des zapfenförmigen zylindrischen Abschnitts mit den in diesem geführten Spreizkörpern im auseinandergezogenen Zustand,
- Fig. 29: eine Draufsicht auf den Schieber mit Betätigungsteil,
- Fig. 30: eine Draufsicht auf den Betätigungshebel,
- Fig. 31: einen der Fig. 19 entsprechenden Schnitt durch ein Beschlagteil mit einem in dem topfförmigen Gehäuse radial verschieblich geführten Einsatzgehäuse,
- Fig. 32: eine Draufsicht auf das Beschlagteil nach Fig. 31, teilweise im Schnitt längs der Linie XXXII-XXXII,
- Fig. 33: eine der Fig. 31 entsprechende Darstellung des Beschlagteils im verriegelten Zustand,
- Fig. 34: eine Draufsicht auf das Beschlagteil nach Fig. 33, teilweise im Schnitt längs der Linie XXXIV-XXXIV,
- Fig. 35: eine Ansicht auf die Trennebenen der beiden Gehäuseteile des Scharniertopfes des Beschlagteils nach den Fig. 31 bis 34,
- Fig. 36: eine Ansicht auf die Trennebenen der Gehäuseteile des in dem Gehäuse radial verschieblich geführten Einsatzgehäuses,
- Fig. 37: eine Draufsicht auf die Gehäusehälften des Einsatzgehäuses nach Fig. 36 unmittelbar vor ihrem Zusammenfügen,
- Fig. 38: eine Draufsicht auf die Gehäuseteile des Gehäuses nach Fig. 35 unmittelbar vor ihrem Zusammenfügen,
- Fig. 39: eine Seitenansicht des Betätigungshebels der Ausführungsform des Beschlagteils nach den Fig. 31 bis 38 und
- Fig. 40: eine Draufsicht auf den Betätigungshebel nach Fig. 39.

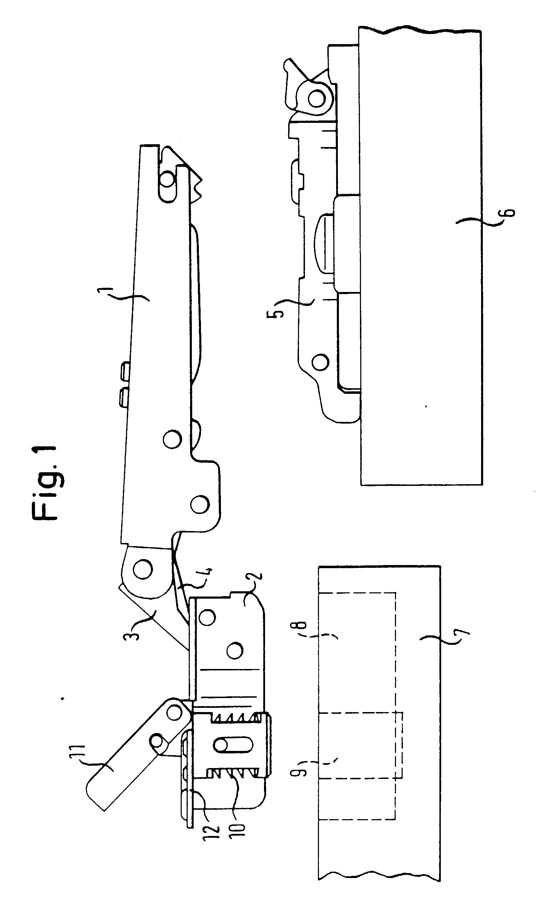

Aus Fig. 1 ist ein übliches Möbelscharnier ersichtlich, dessen mit Befestigungseinrichtungen versehener Scharnierarm 1 durch zwei Lenker 3, 4 mit dem Scharniertopf 2 gelenkig verbunden ist. Der Scharnierarm 1 läßt sich ohne Werkzeuge auf eine Befestigungsplatte 5 aufrasten, die an einer Seitenwand 6 eines Korpusteils eines Möbels befestigt ist. Die lösbare Rastverbindung zwischen dem Scharnierarm 1. und der Befestigungsplatte 5 ist bekannter Art und wird daher hier näher nicht beschrieben.

Auch der Scharniertopf 2 läßt sich an einer Möbeltür 7 ohne Werkzeuge nur durch Betätigung von Hand befestigen. Die Möbeltür 7 ist in üblicher Weise mit einer flachen Sacklochbohrung 8 zur Aufnahme des Scharniertopfes 2 und seitlich von dieser mit zwei vorgebohrten Dübellöchern 9 versehen. In diese vorgebohrten Sacklöcher 9 werden die beiden dübelartigen zylindrischen Abschnitte 10 eingesetzt, die an den flanschförmigen Rändern 12 des Scharniertopfes 2 befestigt sind. Die dübelförmigen zylindrischen Abschnitte 10 werden in den vorgebohrten Löchern 9 nur durch Herabdrücken der einen Betätigungshebel bildenden Platte 11 verriegelt.

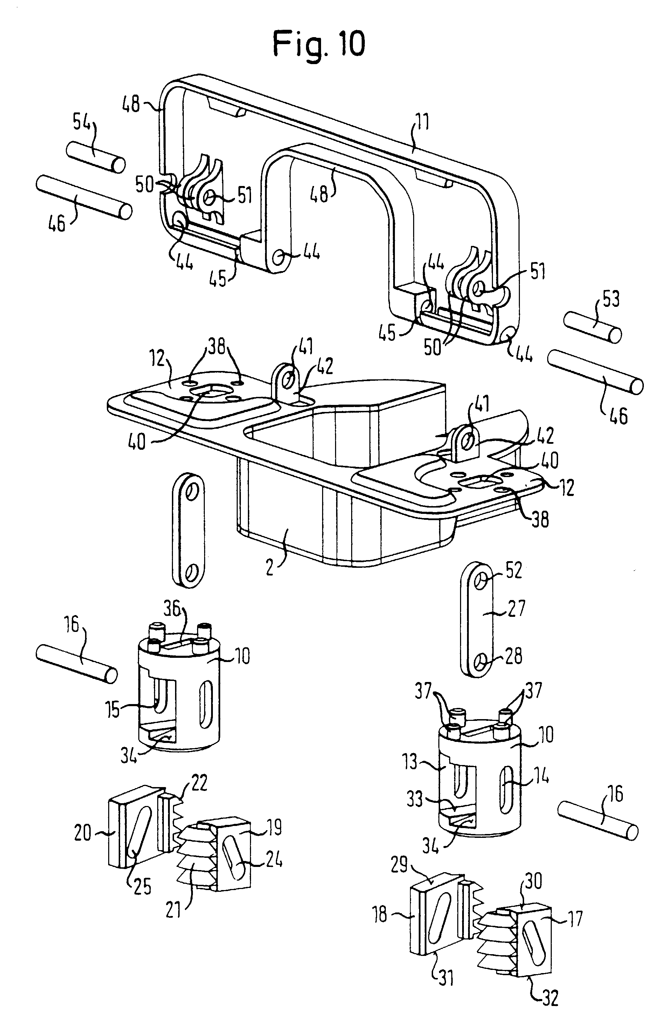

Die an den verbreiterten Seitenteilen des flanschförmigen Randes 12 des Scharniertopfs 2 befestigten Befestigungselemente sind am besten aus Fig. 10 ersichtlich. Die Befestigungselemente bestehen aus den dübelartigen zylindrischen Abschnitten 10. Diese zylindrischen Abschnitte 10 sind jeweils mit einem radialen Durchbruch 13 versehen, der durch Seitenwände und eine Bodenwand und eine Deckwand des zylindrischen Abschnitts 10 begrenzt ist. In den Seitenwänden befinden sich axial verlaufende Langlöcher oder Schlitze 14, 15, in denen ein Bolzen 16 axial verschieblich geführt ist.

In den Durchbruch 13 sind nebeneinander die Spreizkörper 17, 18 radial verschieblich gelagert. Die Spreizkörper 17, 18 bestehen aus rechteckigen Führungsstücken 19, 20, die an ihren aus dem Durchbruch 13 ausfahrbaren und einfahrbaren Vorderseiten kreisbogenförmig gekrümmte Segmente 21, 22 tragen. Diese Segmente überragen mit ihren einen Seitenkanten die rechteckigen Führungsstücke. Die Führungsstücke 19, 20 sind mit sich kreuzenden Langlöchern 24, 25 versehen. Im in den Durchbruch 13 eingesetzten Zustand liegen die Spreizkörper 17, 18 mit ihren Außenseiten an den Seitenwandungen des Durchbruchs an und schließen zwischen sich den Lenker 27 ein. In ihrem in den Durchbruch 13 eingesetzten Zustand sind die Spreizkörper 17, 18 durch den Bolzen 16 fixiert, der die Schlitze 14, 15 des zylindrischen Abschnitts 10, die sich kreuzenden Langlöcher 24, 25 der Spreizkörper 17, 18 und die Bohrung 28 des zwischen den Spreizkörpern befindlichen Lenkers 27 durchsetzt.

Die Stirnseiten 29, 30 und 31, 32 der Führungsstücke 19, 20 der Spreizkörper 17, 18 sind auf Führungsbahnen in der Bodenwandung und der Deckwandung des zylindrischen Abschnitts 10 geführt, von denen aus Fig. 10 nur die unteren Führungsbahnen 33, 34 ersichtlich sind. Die Führungsbahnen 33, 34 steigen in Ausschubrichtung der Spreizkörper 17, 18 an. Die Führungsbahnen in der Deckwandung des zylindrischen Abschnitts 10 verlaufen parallel zu den Führungsbahnen 33, 34, so daß die Spreizkörper zwischen diesen Führungsbahnen gehalten und geführt sind. Die Höhe der Führungsstücke 19, 20 ist derart auf den Abstand der Führungsbahnen des zylindrischen Abschnitts abgestimmt, daß diese verkantungs- und kippfrei auf diesen verschoben werden können.

Die Deckwandung des zylindrischen Abschnitts 10 ist mit einem Schlitz 36 versehen, den der Lenker 27 durchsetzt. Weiterhin ist der zylindrische Abschnitt an seiner Oberseite mit Zapfen 37 versehen, die Bohrungen 38 des flanschförmigen Randes 12 durchsetzen und in diesen zur Halterung des zylindrischen Abschnitts 10 an den flanschförmigen Rändern 12 vernietet sind. Auch die flanschförmigen Ränder 12 sind mit Durchbrüchen 40 für den Lenker 27 versehen.

Der Scharniertopf 2 trägt am inneren Randbereich seines flanschförmigen Randes zwei aufragende mit Bohrungen 41 versehene Laschen 42, die der Lagerung der den Betätigungshebel bildenden Platte 11 dienen. Zum Zweck der gelenkigen Verbindung der Platte 11 mit dem Scharniertopf 2 ist die Platte in ihrem inneren Randbereich mit Lagerbohrungen 44 versehen, die durch Schlitze 45 unterbrochen sind. In diese Schlitze 45 greifen die Lagerlaschen 41 des Scharniertopfes 2, wobei zur gelenkigen Verbindung der Platte 11 mit dem Scharniertopf durch die fluchtenden Bohrungen 44 und 41 die Lagerbolzen 46 hindurchgeführt werden. Die Platte 11 ist in der dargestellten Weise mit einem umlaufenden Rand 48 versehen, so daß sie in ihrem auf den Scharniertopf 2 geklappten Zustand den flanschförmigen Rand 12 des Scharniertopfs vollständig überdeckt.

Im Abstand von den Gelenkachsen bildenden Bolzen 46 sind an der Unterseite der Platte 11 gabelförmige Lagerlaschen 50 vorgesehen, deren Schenkel mit fluchtenden Bohrungen 51 versehen sind. Zwischen Schenkel der Lagerlaschen 50 greifen die oberen Enden der Lenker 27, wobei zur gelenkigen Verbindung der Lenker mit der Platte durch die fluchtenden Bohrungen 51 der Lagerlaschen und 52 der Lenker die Gelenkbolzen 53, 54 geschoben sind.

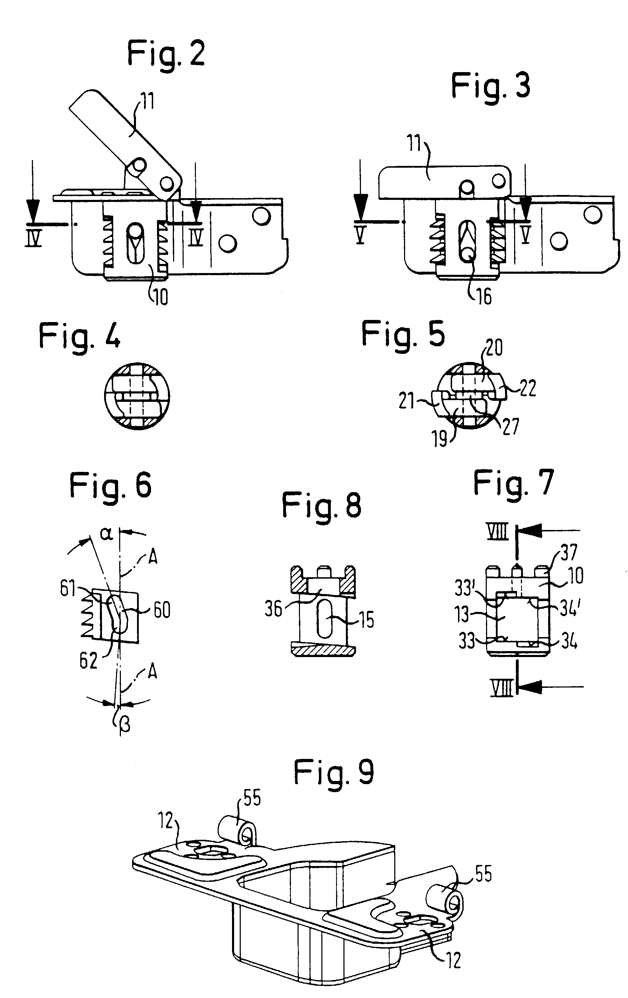

Durch eine Verschwenkung der einen Verkleidungsdeckel bildenden Platte 11 wird aufgrund der beschriebenen Getriebeanordnung durch jeden Lenker 27 jeder Bolzen 16 in den Schlitzen 14, 15 des zylindrischen Abschnitts 10 auf- und abbewegt, so daß durch diese Schwenkbewegung die Spreizkörper 17, 18 in den Durchbruch 13 eingezogen und beim Herabdrücken der Platte 11 aus dem Durchbruch 13 dadurch herausgefahren werden, daß der Bolzen 16 durch ein Verfahren in den Langlöchern 24, 25 den Spreizkörpern eine radiale Bewegung erteilt. Die eingezogene Stellung der Spreizkörper 17, 18 ist aus Fig. 2 ersichtlich, in der die Platte 11 von dem Scharniertopf 2 abgeschwenkt ist. In der aus Fig. 3 ersichtlichen Spreizstellung ist die Platte 11 auf den Scharniertopf niedergedrückt, so daß sich die Spreizkörper in ihrer radial ausgefahrenen Verriegelungsstellung befinden.

Die Spreizkörper 17, 18 sind, wie aus Fig. 10 ersichtlich ist, identisch ausgebildet.

Bei der Ausführungsform nach Fig. 6 sind die Führungsstücke der Spreizkörper mit einem abgewinkelten Langloch 60 versehen. Und zwar besitzt das Langloch 60 einen oberen längeren Ast 61, der um den Winkel zu der Längsmittelebene A des zylindrischen Abschnitts 10 geneigt ist und einen unteren kürzeren Abschnitt 62, der in der dargestellten Weise gegensinnig zu dem Abschnitt 61 um den Winkel zu der Längsmittelebene A geneigt ist.

Weiterhin ist aus Fig. 6 auch ersichtlich, daß die oberen und unteren Führungsflächen 29, 31 in der gleichen Weise abgeschrägt sind wie die Laufflächen 33, 33' und 34, 34' in der Boden- und Deckwandung des Durchbruchs 13 des zylindrischen Abschnitts.

Der aus Fig. 9 ersichtliche Scharniertopf unterscheidet sich von dem aus Fig. 10 im wesentlichen nur dadurch, daß statt der mit Bohrungen 41 versehenen Laschen 42 Lagerösen bildende eingerollte Lappen 65 vorgesehen sind.

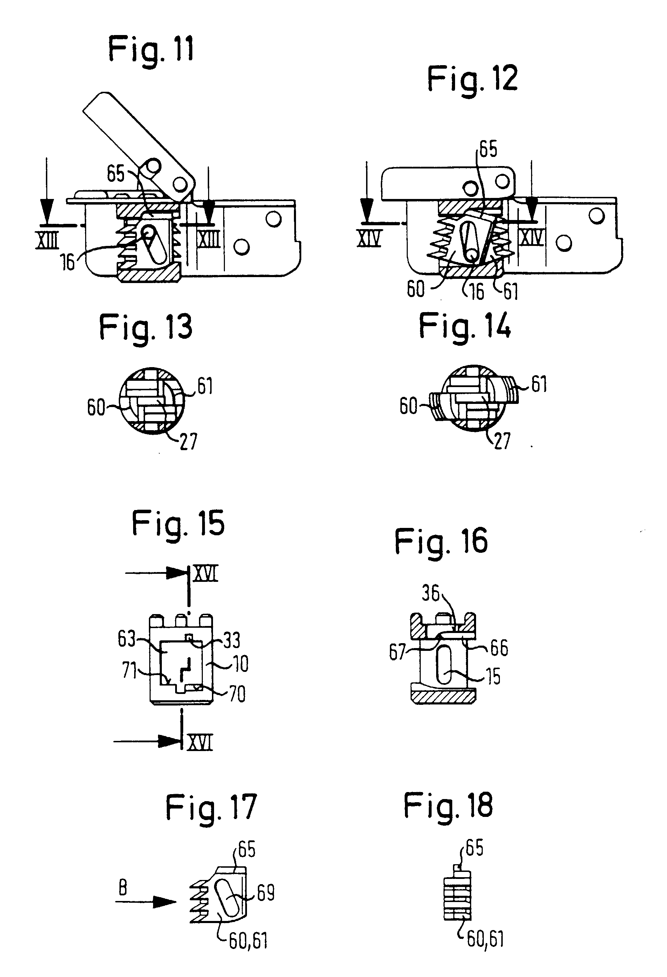

Ein weiteres Ausführungsbeispiel der Erfindung wird nun anhand der Fig. 11 bis 18 beschrieben. Dieses Ausführungsbeispiel unterscheidet sich von dem anhand der Fig. 1 bis 10 beschriebenen im wesentlichen nur dadurch, daß die Spreizkörper 60, 61 statt radial verschieblich schwenkbar in dem Durchbruch 63 des zylindrischen Abschnitts 10 gelagert sind. Die Spreizkörper 60, 61, die wiederum identisch ausgebildet sind, besitzen an den oberen Seiten ihrer Führungsstücke steg- oder federartige Fortsätze 65, die in entsprechende Nuten 66 der Deckwandung der Durchbrüche 63 greifen, die im Bereich des Schlitzes 36 als Aussparungen fortgeführt sind. Die Aussparungen sind an ihren inneren Endbereichen mit Anschlägen 67 versehen, an denen die äußeren Enden der federartigen Fortsätze 65 in der aus den Fig. 11 und 12 ersichtlichen Weise anliegen.

Die Führungsstücke der Spreizkörper 60, 61 sind wiederum mit sich kreuzenden schräg verlaufenden Langlöchern 69 versehen. Durch den die Schlitze 14, 15 des zylindrischen Abschnitts, die Langlöcher 69 der Spreizkörper 60, 61 und die Lagerbohrung 28 des Lenkers 27 durchsetzenden Bolzen 16 sind die Spreizkörper 60, 61 mit den äußeren Kanten der federartigen Vorsprünge 65 an den Anschlägen 67 gehalten, so daß die Spreizkörper 60, 61 durch Herabdrücken des Bolzens 16 aus ihrer aus Fig. 11 ersichtlichen Stellung, in der sie in der Hüllkontur des zylindrischen Abschnitts liegen, in ihre aus Fig. 12 ersichtliche Spreizstellung ausgeschwenkt werden.

Um ein behinderungsfreies Ausschwenken der Spreizkörper 60, 61 zu ermöglichen, sind die Abstützflächen 70, 71 auf dem Boden des Durchbruchs 63 entsprechend dem Schwenkradius der Spreizkörper 60, 61 abgerundet.

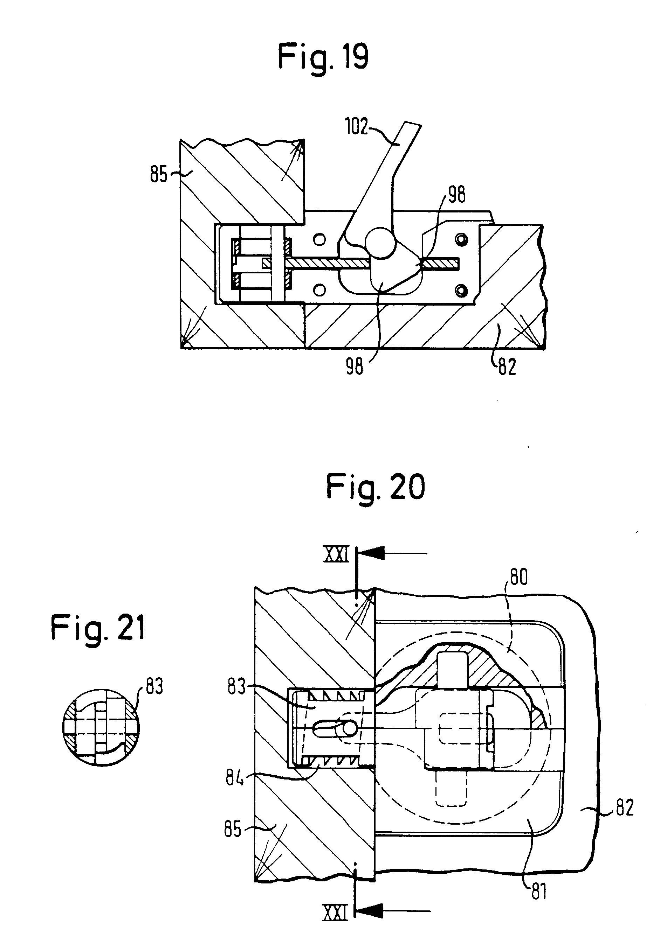

Aus den Fig. 19 bis 30 ist die Ausführungsform eines Verbindungsbeschlages ersichtlich, der der Verbindung beispielsweise zweier stumpf oder winkelig aufeinanderstoßender plattenförmiger Teile dient. Der Verbindungsbeschlag besteht aus einem topfförmigen Gehäuse 80 mit einem dessen zylinderscheibenförmigen Verankerungsteil überragenden etwa rechteckigen Flansch 81. Das zylinderscheibenförmige Einsatzteil des topfförmigen Gehäuses ist in eine flache gefräste Sacklochbohrung eines Möbelteils 82 eingesetzt, wobei die flache Sacklochbohrung die schmale Vorderseite des plattenförmigen Möbelteils 82 anschneidet und der flanschförmige Rand 81 auf dem Rand der flachen Bohrung aufliegt. Das topfförmige Gehäuse ist einstückig (materialhomogen) mit einem radialen zylinderzapfenförmigen Fortsatz 83 versehen, der in eine Sacklochbohrung 84 der winkelig mit der Möbelplatte 82 zu verbindenden Möbelplatte 85 eingesetzt ist. Der zylinderzapfenförmige Fortsatz 83 entspricht dem zylinderzapfenförmigen Fortsatz 10 der Ausführungsbeispiele 1 bis 18, so daß dieser und die in diesem geführten und durch den Bolzen 16 spreizbaren und einziehbaren Spreizkörper hier nicht nochmals besonders beschrieben werden. Der zylinderzapfenförmige Fortsatz 83 des Ausführungsbeispiels 19 bis 23 unterscheidet sich von dem der vorhergehenden Ausführungsbeispiele im wesentlichen nur dadurch, daß er in seiner axialen Mittelebene geteilt ist und seine Hälften 83' und 83'' einstückig mit den Gehäusehälften 80' und 80'' des topfförmigen Gehäuses 80 verbunden sind.

Das zylindrische Einsatzteil des topfförmigen Gehäuses ist an seiner Vorderseite, an der es einstückig mit dem zylindrischen Fortsatz 83 verbunden ist, abgeflacht. In der Ebene dieser Abflachung befindet sich auch die abgeflachte vordere Kante des Flansches 81, der in der aus den Fig. 19 bis 23 ersichtlichen Weise mit der vorderen schmalen Stirnseite des Möbelteils 82 fluchtet.

Das topfförmige Gehäuse 80 ist mit einer im wesentlichen rechtekkigen Ausnehmung 86 versehen, dessen Seitenwandungen mit parallelen Nuten 87 und Sacklochbohrungen 88 versehen sind. In den Nuten 87 sind die zueinander parallelen Seitenkanten des Betätigungsteils 89 geführt, das einstückig mit dem Schieber 90 verbunden ist. Der Schieber 90 ist mit einer vorderen Bohrung 91 versehen, in der der die Spreizkörper 17, 18 bewegende Bolzen 16 gehaltert ist.

Das Betätigungsteil 89 des Schiebers 90 ist in seiner Mitte mit einem rechteckigen Durchburch 92 versehen, in den in der aus den Fig. 19 bis 23 ersichtlichen Weise der untere kürzere Hebelarm 94 des Betätigungshebels 95 greift. Der Betätigungshebel 95 ist einstückig ausgebildet und besitzt angespritzte seitliche Lagerzapfen 96, mit denen er in den Sacklochbohrungen 88 der Gehäuse- hälften 80', 80'' schwenkbar gelagert ist. Der untere kürzere Hebelarm 94 weist etwa die Form eines gleichschenkeligen Dreiecks mit abgerundeten Ecken 98 auf, wobei die Winkel des gleichschenkeligen Dreiecks und der Krümmungsradius der abgerundeten Ecken so gewählt ist, daß der Hebel 94 mit seiner vorderen und hinteren Seite im wesentlichen immer an den Vorder- und Hinterkanten 99, 100 des Durchbruchs 92 anliegt.

Das topfförmige Gehäuse ist auf seiner Oberseite anschließend an die Aussparung 86 mit einer flachen Ausnehmung 101 versehen, in die sich im verriegelten Zustand des Verbindungsbeschlages der längere Hebelarm 102 des Betätigungshebels 95 legt, so daß dieser im verriegelten Zustand im wesentlichen der Ebene des Flansches 81 liegt.

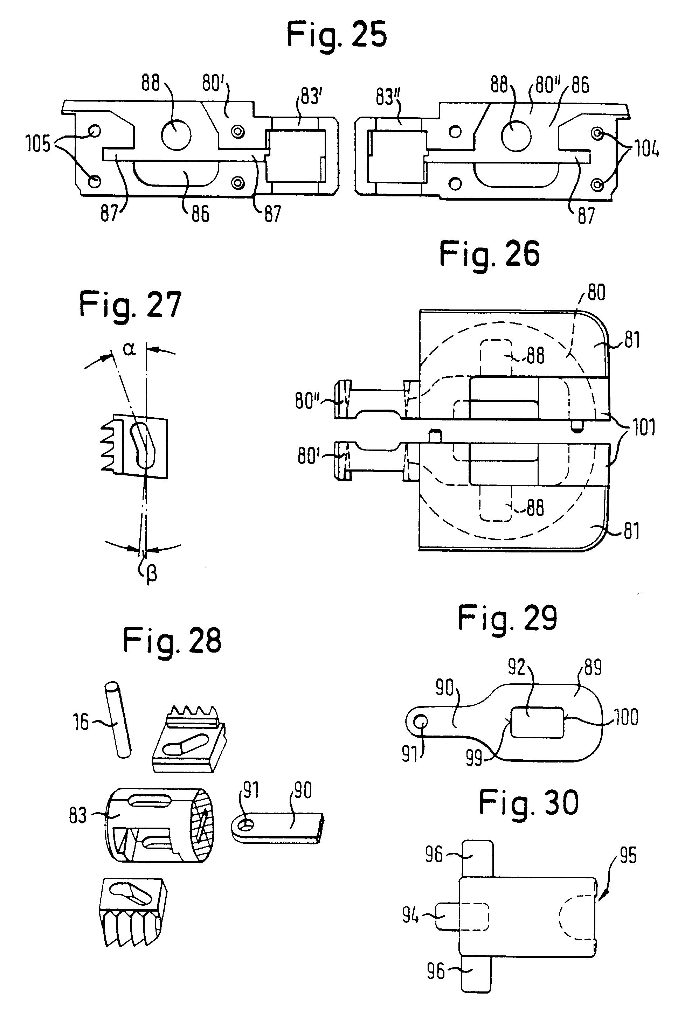

Die Gehäusehälften 80', 80'' sind in der aus Fig. 25 ersichtlichen Weise in ihrer Trennebene mit Verbindungszapfen 104 und komplementären Bohrungen 105 versehen, so daß die Gehäusehälften nach dem Einsetzen des Betätigungshebels, des Schiebers 90 mit Betätigungsteil, des Bolzens 16 und der Spreizkörper zusammengefügt werden können.

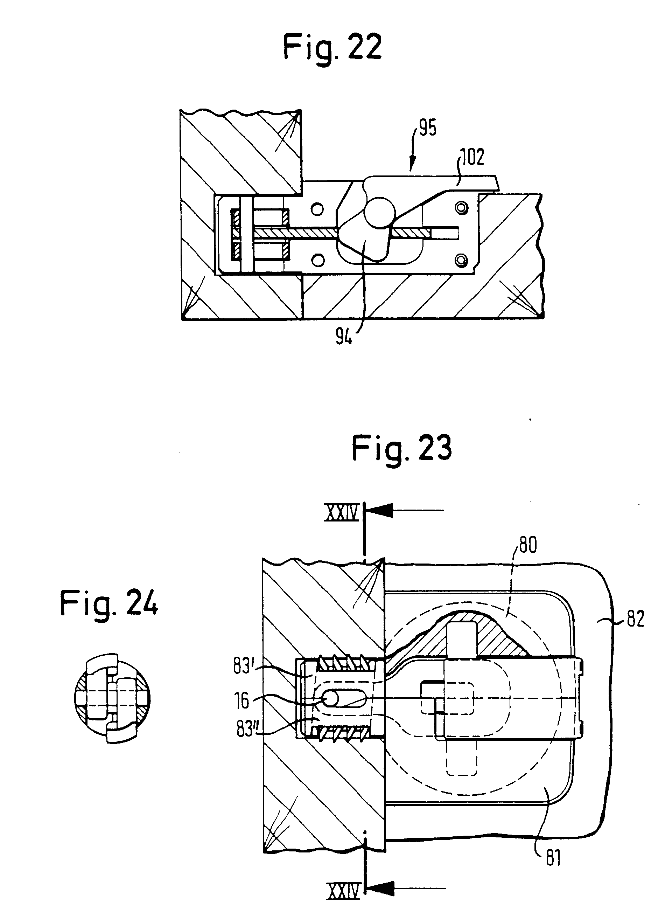

Aus den Fig. 19, 20 ist der Verbindungsbeschlag in seinem entriegelten Zustand ersichtlich, in dem die zu verriegelnden Teile durch Zusammenstecken vormontiert werden. Die Verriegelung erfolgt sodann durch Umlegen des längeren Hebelarms 102 des Betätigungshebels 95 aus der aus Fig. 19, 20 entriegelten Stellung in die aus den Fig. 22, 23 ersichtliche verriegelte Stellung.

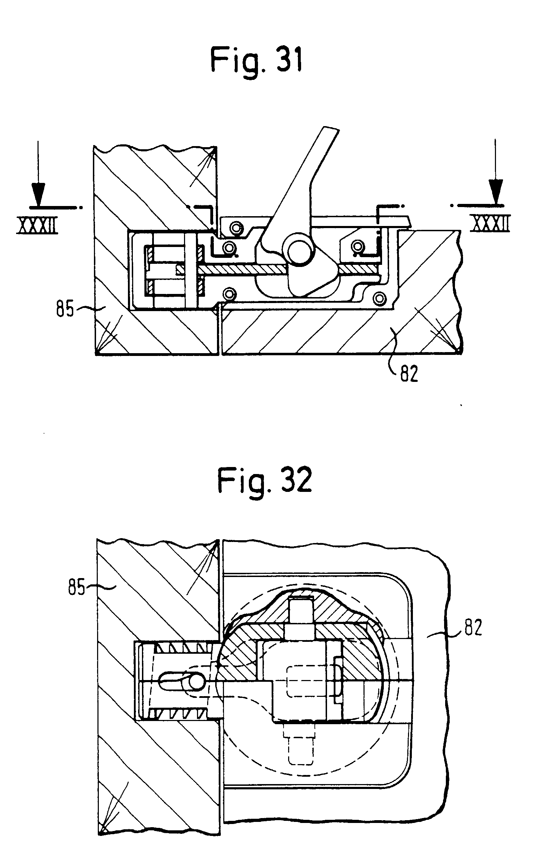

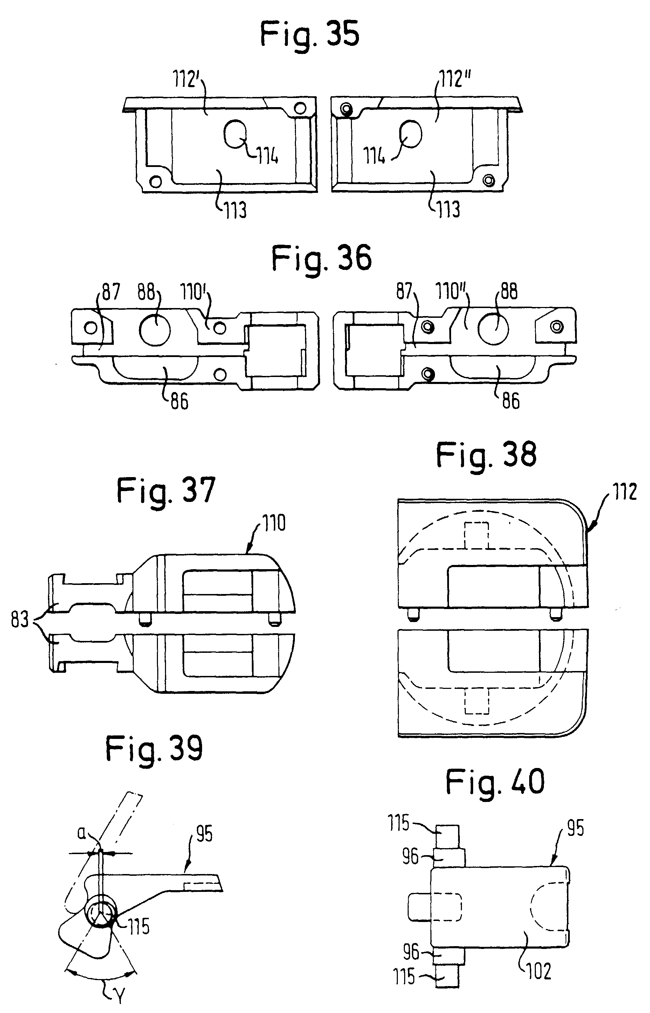

Ein letztes Ausführungsbeispiel des erfindungsgemäßen Verbindungsbeschlages wird nun anhand der Fig. 31 bis 40 beschrieben. Dieses unterscheidet sich von dem nach den Fig. 19 bis 30 dadurch, daß die Hälften des zapfenförmigen zylindrischen Fortsatzes 83 einstückig mit den beiden Gehäusehälften eines Einsatzgehäuses 110 verbunden sind. Dieses Einsatzgehäuse besteht aus den zusammenfügbaren Gehäusehälften 110', 110'', wobei auch das Einsatzgehäuse 110 mit einer rechteckigen Ausnehmung 86 versehen ist, in deren Seitenwandung die Führungsnuten 87 und die Bohrungen 88 zur Lagerung der Lagerzapfen 96 des Betätigungshebels 95 angeordnet sind. Das mit zueinander parallelen Außenseiten versehene Einsatzgehäuse in entsprechenden Führungen des topfförmigen Gehäuses 112 radial verschieblich geführt. Das topfförmige Gehäuse 112 besteht wiederum aus zwei in der axialen Mittelebene geteilten Gehäusehälften 112', 112'', die in der aus Fig. 38 ersichtlichen Weise zusammenfügbar sind.

In den Seitenwandungen 113 des topfförmigen Gehäuses 112 sind sich in axialer Richtung erstreckende Langlöcher 114 angeordnet, die als Sacklöcher ausgeführt sind und in denen Lagerzapfen 115 gelagert sind, die exzentrische Verlängerungen der Lagerzapfen 96 bilden. Die Bohrungen 88 in den Seitenwandungen des Einsatzgehäuses 110 sind als Durchgangsbohrungen ausgeführt, so daß die exzentrischen Lagerzapfen 115 in die Sacklochbohrungen 114 der Seitenwandungen der Gehäusehälften 112', 112'' greifen.

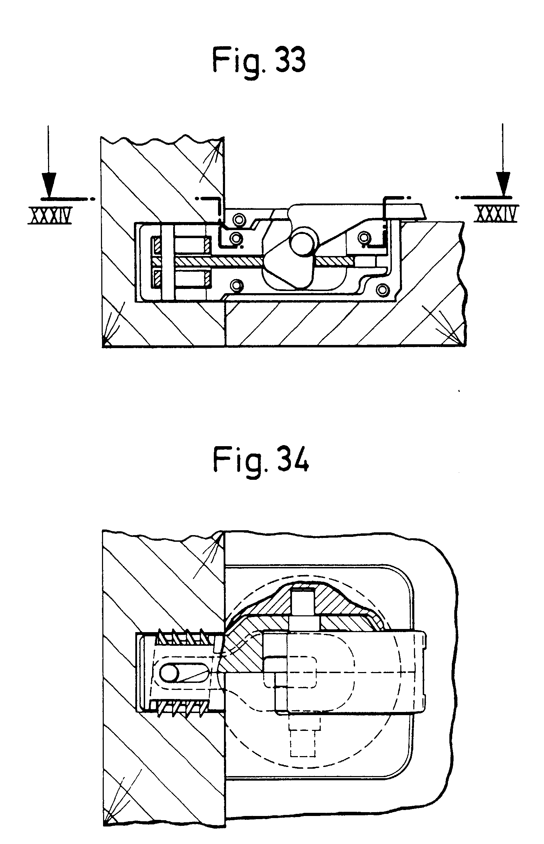

Bei einem Verschwenken des längeren Hebelarms 102 des Betätigungshebels 95 aus der aus den Fig. 31, 32 ersichtlichen entriegelten Stellung in die aus den Fig. 33, 34 ersichtliche verriegelte Stellung um den Winkel wird das Einsatzgehäuse aufgrund der Exzentrizität der Lagerzapfen 115 um die Strecke a in radialer Richtung in das Gehäuse 112 hineingezogen, so daß in der aus den Fig. 31 bis 34 ersichtlichen Weise der Spalt zwischen den Möbelteilen 82, 85 aufgehoben wird.

## Patentansprüche

1. Befestigungselement für Beschlagteile, mit einem zapfenförmigen, im wesentlichen zylindrischen Abschnitt (10), der mit einem radialen Durchbruch (13) versehen ist,
**dadurch gekennzeichnet,**
daß in dem radialen Durchbruch (13) zwei Spreizkörper (17, 18) über die zylindrische Hüllkontur des zylindrischen Abschnitts (10) gegensinnig ausfahrbar und in deren Bereich einziehbar geführt sind und
daß ein Lenker (27) oder Schieber (90) vorgesehen ist, deren eines Ende zu seiner Bewegung von einem Betätigungshebel beaufschlagt ist und deren anderes Ende an einem in axialer Richtung des zylindrischen Abschnitts (10) verlaufenden Schlitzen (14, 15) des zylindrischen Abschnitts (10) geführten Bolzen befestigt ist, der derart angeordnete Langlöcher (24, 25) des Spreizkörpers (17, 18) durchsetzt,
daß durch eine Hin- und Herbewegung des Lenkers (27) bzw. Schiebers bei der Verschwenkung bzw. Herabschwenkung des Betätigungshebels die Spreizkörper (17, 18) ausgefahren bzw. eingezogen werden.

2. Befestigungselement nach Anspruch 1 für ein plattenförmiges Teil, vorzugsweise für ein Möbelbeschlagteil, dadurch gekennzeichnet, daß mit dem plattenförmigen Teil der im wesentlichen zylindrische Abschnitt (10), verbunden ist, daß an dem plattenförmigen Teil ein Hebel angelenkt ist und daß mit einem Ende des Hebels im Abstand von seinem Schwenklager (46) ein Lenker (27) gelenkig verbunden ist, dessen anderes Ende an dem in den axialen Schlitzen (14, 15) des zylindrischen Abschnitts (10) geführten Bolzen (16) befestigt ist.

3. Befestigungselement nach Anspruch 1 oder 2, dadurch gekennzeichnet, daß die Spreizkörper (17, 18) aus etwa rechteckigen Führungsstücken (19, 20) bestehen, die an ihren aus- und einfahrbaren Seiten bogenförmig gekrümmte verzahnte Segmente (21, 22) tragen.

4. Befestigungselement nach Anspruch 3, dadurch gekennzeichnet, daß die Segmente (21, 22) mit sägezahnartigen Rippen versehen sind.

5. Befestigungselement nach Anspruch 4, dadurch gekennzeichnet, daß die dem plattenförmigen Teil zugewandten Flanken der Rippen stärker abgeschrägt sind als die Gegenflanken.

6. Befestigungselement nach einem der Ansprüche 3 bis 5, dadurch gekennzeichnet, daß die Führungsstücke (19, 20) mit ihren inneren Flächen an dem zwischen diesen eingeschlossenen Lenker (27) und mit ihren äußeren Flächen an den Seitenwänden des Durchbruchs (13) geführt sind.

7. Befestigungselement nach einem der Ansprüche 3 bis 6, dadurch gekennzeichnet, daß die Führungsstücke (19, 20) mit stirnseitigen Flächen (29, 30; 31, 32) versehen sind, die zwischen den Durchbruch (13) begrenzenden, boden- und deckseitigen Führungsflächen des zylindrischen Abschnitts (10) geführt sind, die für jeden Spreizkörper (17, 18) in Ausfahrrichtung ansteigend geneigt sind.

8. Befestigungselement nach Anspruch 7, dadurch gekennzeichnet, daß die stirnseitigen Flächen (29, 30; 31, 32) der Führungsstücke (19, 20) entsprechend in Führungsflächen (33, 34) des Durchbruchs (13) des zylindrischen Abschnitts (10) abgeschrägt sind.

9. Befestigungselement nach einem der Ansprüche 3 bis 8, dadurch gekennzeichnet, daß die Führungsstücke (19, 20) sich kreuzende Abschnitte der Langlöcher (24, 25) aufweisen.

10. Befestigungselement nach einem der Ansprüche 3 bis 9, dadurch gekennzeichnet, daß die Langlöcher (60) der Führungsstücke (19, 20) winkelig ausgebildet sind und einen oberen längeren stärker von der Mittelebene (A) des zylindrischen Abschnitts (10) abgewinkelten und einen unteren, schwächer gegensinnig von der Mittelebene (4) abgewinkelten kürzeren Ast (61, 62) aufweisen.

11. Befestigungselement nach Anspruch 3 oder 4, dadurch gekennzeichnet, daß die Führungsstücke an ihren oberen Seiten mit Anschlägen (65) versehen sind, die mit Gegenanschlägen (67) der Deckwände der Durchbrüche (63) zusammenwirken, so daß die Spreizkörper (60, 61) durch ein Verfahren des Bolzens (16) in den Langlöchern (69) der Spreizkörper und den Schlitzen (14, 15) des zylindrischen Abschnitts (10) über die Hüllkontur des zylindrischen Abschnitts (10) ausgeschwenkt und in diese eingezogen werden.

12. Befestigungselement nach einem der Ansprüche 1 bis 11, dadurch gekennzeichnet, daß zwei Befestigungselemente an dem flanschartig erweiterten Rand (12) eines Scharniertopfes (2) oder der Befestigungsplatte eines Scharnierarms befestigt sind.

13. Befestigungselement nach Anspruch 11 oder 12, dadurch gekennzeichnet, daß der Hebel aus einer Platte (11) besteht, die in ihrer eingeschwenkten Verriegelungsstellung den flanschartig erweiterten Rand (12) des Scharniertopfes (2) oder den der Befestigung dienenden Flügel der Befestigungsplatte überdeckt.

14. Befestigungselement nach einem der Ansprüche 1 und 3 bis 11, dadurch gekennzeichnet, daß der zapfenförmige zylindrische Abschnitt mit einem an einem Möbelteil zu befestigenden Beschlagteil verbunden und in eine an seinen Durchmesser angepaßte Bohrung eines Möbelteils einsetzbar ist.

15. Befestigungselement nach Anspruch 14, dadurch gekennzeichnet, daß der zylindrische Abschnitt einen radialen Fortsatz eines topfförmigen Gehäuses bildet.

16. Befestigungselement nach Anspruch 14 oder 15, dadurch gekennzeichnet, daß der Schieber einstückig mit einem Betätigungsteil versehen ist, an dem der Betätigungshebel angreift.

17. Befestigungselement nach einem der Ansprüche 14 bis 16, dadurch gekennzeichnet, daß das Betätigungsteil des Schiebers in seitlichen Nuten der Seitenwandungen einer Aussparung des Gehäuses radial verschieblich geführt ist und daß der mit diesem verbundene Schieber durch einen Durchbruch der Umfangswandung des Gehäuses in den zapfenartigen zylindrischen Fortsatz greift.

18. Befestigungselement nach einem der Ansprüche 14 bis 17, dadurch gekennzeichnet, daß der Betätigungshebel als zweiarmiger Hebel ausgebildet und mit seiner Schwenkachse in Bohrungen der Seitenwände der Ausnehmung gelagert ist und daß der kürzere Arm in einen Durchbruch des Betätigungsteils greift und der längere Arm der Oberseite des Gehäuses liegt.

19. Befestigungselement nach Anspruch 18, dadurch gekennzeichnet, daß der längere Arm aus seiner aufragenden gelösten Stellung des Befestigungselements in seine Verriegelungsstellung schwenkbar ist, in der er etwa in der Ebene der Deckplatte des Gehäuses liegt.

20. Befestigungselement nach Anspruch 18 oder 19, dadurch gekennzeichnet, daß das Betätigungsteil mit einem rechteckigen Durchbruch versehen ist und daß der in diesen greifende kurze Hebelarm etwa die Form eines gleichschenkeligen Dreiecks mit abgerundeten Ecken besitzt, dessen Spitze im Bereich der Schwenkachse des Betätigunghebels liegt.

21. Befestigungselement nach einem der Ansprüche 14 bis 20, dadurch gekennzeichnet, daß die Winkel und Krümmungsradien der Ecken des kurzen Hebelarms derart aufeinander abgestimmt sind, daß bei einem Verschwenken des Hebels die Vorder- und Hinterseiten des kürzeren Hebels im wesentlichen in der Vorder- und Hinterkante des rechteckigen Durchbruchs des Betätigungsteils anliegen.

22. Befestigungselement nach einem der Ansprüche 14 bis 21, dadurch gekennzeichnet, daß das Gehäuse in seiner durch den zylindrischen Abschnitt verlaufenden axialen Mittelebene geteilt ist und aus zwei spiegelbildlich zueinander ausgebildeten Teilen besteht.

23. Befestigungselement nach einem der Ansprüche 14 bis 22, dadurch gekennzeichnet, daß der zapfenförmige zylindrische Abschnitt die Verlängerung eines Einsatzgehäuses, in dem der Schieber und der Betätigunghebel gelagert sind, bildet, daß das Einsatzgehäuse längsverschieblich in dem topfförmigen Gehäuse gelagert und daß die Lagerzapfen des Betätigungshebels in Bohrungen der Seitenwandungen des Einsatzgehäuses gelagert und mit exzentrischen Verlängerungszapfen versehen sind, die in Bohrungen der Wandungen der Aussparung des Gehäuses gelagert sind.

## Claims

1. Fastening element for fittings, having a stub-like, essentially cylindrical section (10) which is provided with a radial through-passage (13), characterized in that two spreading elements (17, 18) are guided in the radial through-passage (13) such that they can be extended in opposite directions beyond the outer cylindrical contour of the cylindrical section (10) and can be drawn into the region of said contour, and in that there is provided a link (27) or slide (90), of which one end, for movement purposes, is acted upon by an actuating lever and the other end is fastened on a pin, which is guided in slits (14, 15) of the cylindrical section (10), said slits running in the axial direction of said cylindrical section (10), and passes through slots (24, 25) of the spreading element (17, 18) which are arranged such that by movement back and forth of the link (27) or slide, when the actuating lever is pivoted or pivoted down, the spreading elements (17, 18) are extended or drawn in.

2. Fastening element according to Claim 1 for a panel-like part, preferably for a furniture-fitting part, characterized in that the essentially cylindrical section (10) is connected to the panel-like part, in that a lever is articulated on the panel-like part, and in that a link (27) is connected in an articulated manner to one end of the lever, at a distance from the pivot pin (46) of the latter, and the other end of this lever is fastened on the pin (16), which is guided in the axial slits (14, 15) of the cylindrical section (10).

3. Fastening element according to Claim 1 or 2, characterized in that the spreading elements (17, 18) comprise approximately rectangular guide pieces (19, 20) which, on their sides which can be extended and retracted, bear toothed segments (21, 22) which are curved in an arcuate manner.

4. Fastening element according to Claim 3, characterized in that the segments (21, 22) are provided with sawtooth-like ribs.

5. Fastening element according to Claim 4, characterized in that those flanks of the ribs which are directed towards the panel-like part are bevelled to a greater extent than the opposite flanks.

6. Fastening element according to one of Claims 3 to 5, characterized in that the guide pieces (19, 20) are guided, by way of their inner surfaces, on the link (27) enclosed between them and, by way of their outer surfaces, on the side walls of the through-passage (13).

7. Fastening element according to one of Claims 3 to 6, characterized in that the guide pieces (19, 20) are provided with end-side surfaces (29, 30; 31, 32) which are guided between base-side and top-side guide surfaces of the cylindrical section (10) which delimit the through-passage (13) and, for each spreading element (17, 18), are inclined upwards in the extending direction.

8. Fastening element according to Claim 7, characterized in that the end-side surfaces (29, 30; 31, 32) of the guide pieces (19, 20) are bevelled to correspond to the guide surfaces (33, 34) of the through-passage (13) of the cylindrical section (10).

9. Fastening element according to one of Claims 3 to 8, characterized in that the guide pieces (19, 20) have intersecting sections of the slots (24, 25).

10. Fastening element according to one of Claims 3 to 9, characterized in that the slots (60) of the guide pieces (19, 20) are of angular design and have a top longer branch (61) which is angled from the centre plane (A) of the cylindrical section (10) to a greater extent, and a bottom shorter branch (62) which is angled, in the opposite direction, from the centre plane (A) to a lesser extent.

11. Fastening element according to Claim 3 or 4, characterized in that, on their top sides, the guide pieces are provided with stops (65) which interact with mating stops (67) of the top walls of the through-passages (63) with the result that, by displacement of the pin (16) in the slots (69) of the spreading elements and in the slits (14, 15) of the cylindrical section (10), the spreading elements (60, 61) are pivoted out beyond the outer contour of the cylindrical section (10) and are drawn into the same.

12. Fastening element according to one of Claims 1 to 11, characterized in that two fastening elements are fastened on the border (12) of a hinge cup (2), said border being widened in a flange-like manner, or on the fastening plate of a hinge arm.

13. Fastening element according to Claim 11 or 12, characterized in that the lever comprises a plate (11) which, in its pivoted-in locking position, covers over the border (12) of the hinge cup (2), said border being widened in a flange-like manner, or the fastening-plate wing serving for fastening purposes.

14. Fastening element according to one of Claims 1 and 3 to 11, characterized in that the stub-like cylindrical section is connected to a fitting which is to be fastened on a furniture part, and can be inserted into a bore, provided in a furniture part, which is adapted to its diameter.

15. Fastening element according to Claim 14, characterized in that the cylindrical section forms a radial continuation of a cup-like housing.

16. Fastening element according to Claim 14 or 15, characterized in that the slide is provided integrally with an actuating part on which the actuating lever acts.

17. Fastening element according to one of Claims 14 to 16, characterized in that the actuating part of the slide is guided in a radially displaceable manner in lateral grooves of the side walls of a recess of the housing, and in that the slide connected to said actuating part engages, through a through-passage of the peripheral wall of the housing, into the stub-like cylindrical continuation.

18. Fastening element according to one of Claims 14 to 17, characterized in that the actuating lever is designed as a two-armed lever and is mounted, by way of its pivot pin, in bores of the side walls of the recess, and in that the shorter arm engages in a through-passage of the actuating part and the longer arm is located on the top side of the housing.

19. Fastening element according to Claim 18, characterized in that the longer arm can be pivoted out of its upright position in which the fastening element is released, into its locking position, in which it is located approximately in the plane of the top plate of the housing.

20. Fastening element according to Claim 18 or 19, characterized in that the fastening part is provided with a rectangular through-passage, and in that the short lever arm which engages therein is approximately in the form of an isosceles triangle which has rounded corners and of which the apex is located in the region of the pivot pin of the actuating lever.

21. Fastening element according to one of Claims 14 to 20, characterized in that the angles and radii of curvature of the corners of the short lever arm are coordinated with one another such that, when the lever is pivoted, the front and rear sides of the shorter lever rest essentially on the front and rear edges of the rectangular through-passage of the actuating part.

22. Fastening element according to one of Claims 14 to 21, characterized in that the housing is divided in its axial centre plane running through the cylindrical section, and comprises two parts which are of mirror-inverted design.

23. Fastening element according to one of Claims 14 to 22, characterized in that the stub-like cylindrical section forms the extension of an insert housing, in which the slide and the actuating lever are mounted, in that the insert housing is mounted in a longitudinally displaceable manner in the cup-like housing, and in that the bearing journals of the actuating lever are mounted in bores of the side walls of the insert housing and are provided with eccentric extension journals which are mounted in bores of the walls of the recess of the housing.

## Revendications

1. Elément de fixation pour des garnitures, avec un tronçon en forme d'ergot, sensiblement cylindrique (10) qui est pourvu d'un perçage radial (13), caractérisé en ce que dans le perçage radial (13), deux corps d'écartement (17, 18) sont guidés de manière à sortir en sens opposé par le contour enveloppant cylindrique du tronçon cylindrique (10) et pour pouvoir être rentrés dans la zone de celui-ci et en ce qu'il est prévu une bielle (27) ou un coulisseau (90) dont une extrémité, en vue de son déplacement, est sollicitée par un levier d'actionnement et dont l'autre extrémité est fixée à un boulon guidé dans des fentes (14, 15) s'étendant dans la direction axiale du tronçon cylindrique (10), qui traverse des trous oblongs (24, 25) du corps d'écartement (17, 18) disposés de manière que par un mouvement de va-et-vient de la bielle (27) respectivement du coulisseau, lors du pivotement respectivement du pivotement vers le bas du levier d'actionnement, les corps d'écartement (17, 18) sont sortis respectivement rentrés.

2. Elément de fixation selon la revendication 1 pour une partie en forme de plaque, de préférence pour une garniture de meuble, caractérisé en ce qu'il est relié à la partie en forme de plaque le tronçon (10) sensiblement cylindrique, en ce qu'il est articulé à la partie en forme de plaque un levier et en ce qu'il est relié à une extrémité du levier, à une certaine distance de son palier de pivotement (46) une bielle (27) dont l'autre extrémité est fixée au boulon (16) guidé dans les fentes axiales (14, 15) du tronçon cylindrique (10).

3. Elément de fixation selon la revendication 1 ou 2, caractérisé en ce que les corps d'écartement (17, 18) sont constitués de pièces de guidage (19, 20) à peu près rectangulaires qui portent à leurs côtés pouvant être sortis et rentrés des segments dentés courbés en forme d'arc (21, 22).

4. Elément de fixation selon la revendication 3, caractérisé en ce que les segments (21, 22) sont pourvus de nervures en dents de scie.

5. Elément de fixation selon la revendication 4, caractérisé en ce que les flancs des nervures orientés vers la partie en forme de plaque sont chanfreinés plus fortement que les contre-flancs.

6. Elément de fixation selon l'une des revendications 3 à 5, caractérisé en ce que les pièces de guidage (19, 20) sont guidées avec leurs surfaces intérieures à la bielle (27) renfermée entre celles-ci et par leurs surfaces extérieures aux parois latérales du perçage (13).

7. Elément de fixation selon l'une des revendications 3 à 6, caractérisé en ce que les pièces de guidage (19, 20) sont pourvues de surfaces au côté frontal (29, 30 ; 31, 32) qui sont guidées entre les surfaces de guidage aux côtés inférieur et supérieur, délimitant le perçage (13) du tronçon cylindrique (10) qui sont disposées pour chaque corps d'écartement (17, 18) suivant une remontée dans la direction de sortie.

8. Elément de fixation selon la revendication 7, caractérisé en ce que les faces (29, 30 ; 31, 32) au côté frontal des pièces de guidage (19, 20) sont chanfreinées conformément aux surfaces de guidage (33, 34) du perçage (13) du tronçon cylindrique (10).

9. Elément de fixation selon l'une des revendications 3 à 8, caractérisé en ce que les pièces de guidage (19, 20) présentent des tronçons croisés des trous oblongs (24, 25).

10. Elément de fixation selon l'une des revendications 3 à 9, caractérisé en ce que les trous oblongs (60) des pièces de guidage (19, 20) sont réalisées suivant un angle et présentent une branche supérieure plus longue (61) coudée plus fortement relativement au plan médian (A) du tronçon cylindrique (10) et une branche inférieure plus courte (62) coudée moins fortement dans le sens opposé relativement au plan médian (4).

11. Elément de fixation selon la revendication 3 ou 4, caractérisé en ce que les pièces de guidage sont pourvues à leurs côtés supérieurs de butées (65) qui coopèrent avec des contre-butées (67) de parois supérieurs des perçages (63) de telle sorte que les corps d'écartement (60, 61) en déplaçant le boulon (16) dans les trous oblongs (69) des corps d'écartement et les fentes (14, 15) du tronçon cylindrique (10) sont pivotés vers l'extérieur par le contour enveloppant du tronçon cylindrique (10) et sont rentrés dans celui-ci.

12. Elément de fixation selon l'une des revendications 1 à 11, caractérisé en ce que deux éléments de fixation sont fixés au bord (12) élargi en forme de bride d'un logement de charnière (2) ou de la plaque de fixation d'un bras de charnière.

13. Elément de fixation selon la revendication 11 ou 12, caractérisé en ce que le levier est constitué d'une plaque (11) qui, dans sa position de verrouillage pivotée vers l'intérieur, recouvre le bord (12) élargi en forme de bride du logement de charnière (2) ou l'aile de la plaque de fixation servant à la fixation.

14. Elément de fixation selon l'une des revendications 1 et 3 à 11, caractérisé en ce que le tronçon cylindrique en forme d'ergot est relié à une ferrure à fixer à une partie de meuble et peut être inséré dans un perçage adapté à son diamètre d'une partie de meuble.

15. Elément de fixation selon la revendication 14, caractérisé en ce que le tronçon cylindrique forme un prolongement radial d'un boîtier en forme de pot.

16. Elément de fixation selon la revendication 14 ou 15, caractérisé en ce que le coulisseau est pourvu en une pièce, d'une pièce d'actionnement à laquelle s'applique le levier d'actionnement.

17. Elément de fixation selon l'une des revendications 14 à 16, caractérisé en ce que la pièce d'actionnement du coulisseau est guidée de manière déplaçable radialement dans des rainures latérales des parois latérales d'un évidement du boîtier et que le coulisseau relié à celle-ci s'engage à travers un perçage dans la paroi périphérique du boîtier dans le prolongement cylindrique en forme d'ergot.

18. Elément de fixation selon l'une des revendications 14 à 17, caractérisé en ce que le levier d'actionnement est réalisé sous forme de levier à deux bras et est logé avec son axe de pivotement dans des perçages des parois latérales de l'évidement et en ce que le bras plus court s'engage dans un perçage de la pièce d'actionnement et que le bras plus long se situe au côté supérieur du boîtier.

19. Elément de fixation selon la revendication 18, caractérisé en ce que le bras plus long peut être pivoté à partir de sa position relâchée érigée de l'élément de fixation dans sa position de verrouillage où il repose à peu près dans le plan de la plaque de recouvrement du boîtier.

20. Elément de fixation selon la revendication 18 ou 19, caractérisé en ce que la pièce d'actionnement est pourvue d'un perçage rectangulaire et en ce que le bras de levier court s'engageant dans celui-ci a à peu près la forme d'un triangle à branches égales avec des coins arrondis dont la pointe se situe au voisinage de l'axe de pivotement du levier d'actionnement.

21. Elément de fixation selon l'une des revendications 14 à 20, caractérisé en ce que les angles et rayons de courbure des coins du bras de levier court sont accordés de telle sorte les uns aux autres que lors d'un pivotement du levier, les côtés avant et arrière du levier plus court s'appliquent essentiellement aux arêtes avant et arrière du perçage rectangulaire de la pièce d'actionnement.

22. Elément de fixation selon l'une des revendications 14 à 21, caractérisé en ce que le boîtier est divisé dans son plan médian axial s'étendant à travers le tronçon cylindrique et est constitué de deux parties réalisées d'une manière spéculairement identique.

23. Elément de fixation selon l'une des revendications 14 à 22, caractérisé en ce que le tronçon cylindrique en forme d'ergot forme le prolongement d'un boîtier d'insertion dans lequel sont logés le coulisseau et le levier d'actionnement, en ce que le boîtier d'insertion est logé de manière déplaçable longitudinalement dans le boîtier en forme de pot et que les pivots de palier du levier d'actionnement sont logés dans des perçages des parois latérales du boîtier d'insertion et sont pourvus de pivots de prolongement excentriques qui sont logés dans des perçages des parois de l'évidement du boîtier.
